# EUROPEAN PATENT APPLICATION

(11) **EP 3 318 655 A1**
(43) Date of publication of application: **09.05.2018**
(21) Application number: 16818045.3
(22) Date of filing: 30.06.2016
(51) Int. Cl.: C23C 4/16, B22D 17/20, B32B 1/08, C23C 4/06, F16L 9/14

(54) **LAMINATED TUBE AND MANUFACTURING METHOD THEREFOR**

(30) Priority: 30.06.2015 JP 2015131430
(71) Applicant: Toyo Kohan Co., Ltd., Tokyo 102-8447 (JP)
(72) Inventor: HIRATA, Kourou, Kudamatsu-shi Yamaguchi 744-8611 (JP); TASHIRO, Hirofumi, Kudamatsu-shi Yamaguchi 744-8611 (JP); LIU, Huanan, Kudamatsu-shi Yamaguchi 744-8611 (JP)
(74) Representative: Ter Meer Steinmeister & Partner
(86) International application number: PCT/JP2016/069499
(87) International publication number: WO 2017/002937

(57) **Abstract**

There is provided a laminated tube (2) including a first layer (21) composed of a first material containing tungsten, a second layer (22) formed on the outer peripheral surface of the first layer and composed of a second material having the property of causing no transformation accompanied by expansion when the second material is cooled from a temperature higher by 1,000°C or more than the melting point of the second material down to 25°C, and a third layer (23) formed on the outer peripheral surface of the second layer and composed of a third material having the property of being capable of causing a transformation accompanied by expansion when the third material is cooled from a temperature higher by 1,000°C or more than the melting point of the third material down to 25°C.

## Description

### [Technical Field]

The present invention relates to a laminated tube and a method for manufacturing a laminated tube.

### [Background Art]

As components used in direct contact with molten metals, for example, components of die casting machines and the like for forming metals are known. The die casting machines are constituted mainly of a plunger, a sleeve, a forming die and the like, and are used in the state of being in direct contact with metals (for example, aluminum, zinc and magnesium) in the molten state. Hence, properties commonly required for such components include the property of the corrosion resistance to molten metals, that is, the prevention of melting by the molten metals, and of formation of reacted layers on the surface due to contact with the molten metals.

Although it is conventionally conceivable that as members for components directly contacting with molten metals, tool steels and hot work tool steels (SKD61 and the like) broadly used for mechanical components are used, these members have the problem of being insufficient in the corrosion resistance to the molten metals. Further although there is known a method of forming a nitrided layer by subjecting hot work tool steels to a nitriding treatment for the purpose of improving the corrosion resistance, the nitrided layer formed by the nitriding treatment has a thickness of as thin as about 20 to 30 µm; then, even if the materials are used, it is difficult to maintain a sufficient corrosion resistance over a long period. In the case where members thus insufficient in the corrosion resistance are applied to components of die casting machines, the following problems arise: the components are liable to be degraded by molten metals; and such components then have to be exchanged frequently; the running cost of the die casting machines is raised; and besides, the continuous productivity is remarkably reduced.

On the other hand, as members for such components, there are also known ceramic materials (for example, sialon (SiAlON) and the like) excellent in the corrosion resistance and high in the hardness at normal temperature and high temperatures. However, since such ceramic materials are high in the manufacturing cost and besides poor in workability, and higher in the hardness than needed, for example, in the case of use as sleeves of die casting machines, and when the sleeves are slid against the low-hardness materials such as plunger tips, the following problem arises: the low-hardness materials are caused to be wore.

By contrast, as a member for a component to be used in direct contact with such a molten metal, for example, Patent Document 1 discloses a boride-based tungsten base alloy (an alloy in which a hard phase containing tungsten is dispersed in a matrix of a binder phase composed of a ternary complex boride and the like) having a high hardness in a high-temperature region and being high in the corrosion resistance to a molten metal and excellent in the thermal shock resistance and the wear resistance.

### [Prior Art Document]

### [Patent Document]

[Patent Document 1] JP 2967789 B

### [Summary of Invention]

### [Problems to be solved by Invention]

In the conventional technology described in the above Patent Document 1, however, the boride-based tungsten base alloy necessitates a sintering temperature as high as 1,500 to 2,000°C and the sintering under pressure by a hot press and in a predetermined gas atmosphere, and thus poses the problems of having a poor productivity and a disadvantage in the cost aspect for being formed into components.

An object of the present invention is to provide a laminated tube excellent in the corrosion resistance to a molten metal and advantageous in the cost aspect.

### [Means for solving problems]

The present inventors have found that the above object can be achieved by forming an inner layer of a first material containing tungsten, and laminating two layers having predetermined different properties on the outer peripheral surface of the inner layer to thereby form a laminated tube, and this finding has led to the completion of the present invention.

That is, according to the present invention, there is provided a laminated tube comprising a first layer composed of a first material containing tungsten, a second layer formed on the outer peripheral surface of the first layer and composed of a second material having the property of causing no transformation accompanied by expansion when the second material is cooled from a temperature higher by 1,000°C or more than the melting point thereof down to 25 °C, and a third layer formed on the outer peripheral surface of the second layer and composed of a third material having the property of being capable of causing a transformation accompanied by expansion when the third material is cooled from a temperature higher by 1,000°C or more than the melting point thereof down to 25°C.

In the present invention, it is preferable that the second material have a thermal expansion coefficient of less than 18 × 10⁻⁶/K, and the third material have a thermal expansion coefficient of less than 18 × 10⁻⁶/K.

In the present invention, it is preferable that a steel layer formed by shrink fitting be provided on the outer peripheral surface of the third layer.

In the present invention, it is preferable that the second material be a ferritic stainless steel, and the third material be a martensitic stainless steel.

In the present invention, it is preferable that the ratio (L/D) of the length L of the laminated tube to the inner diameter D of the first layer be 2 or more.

Further according to the present invention, there is provided a method for manufacturing a laminated tube, the method comprising a first step of providing a core material, a second step of thermally spraying a first material containing a boride-containing tungsten on the outer peripheral surface of the core material to thereby form a first layer, a third step of thermally splaying, on the outer peripheral surface of the first layer, a second material having the property of causing no transformation accompanied by expansion when the second material is cooled from a temperature higher by 1,000°C or more than the melting point thereof down to 25°C to thereby form a second layer, a fourth step of thermally spraying, on the outer peripheral surface of the second layer, a third material having the property of being capable of causing a transformation accompanied by expansion when the third material is cooled from a temperature higher by 1,000°C or more than the melting point thereof down to 25°C to thereby form a third layer, and a fifth step of removing the core material.

In the manufacturing method according to the present invention, it is preferable that the second material be a ferritic stainless steel, and the third material be a martensitic stainless steel.

In the manufacturing method according to the present invention, it is preferable that after the core material be removed in the fifth step, the method further comprise a sixth step of shrink-fitting a steel on the outer peripheral surface of the third layer to thereby form a steel layer thereon.

### [Effect of Invention]

The present invention, since an inner layer is formed of a first material containing tungsten, and second and third layers having predetermined properties are formed on the outer peripheral surface of the inner layer, can provide a laminated tube excellent in the corrosion resistance to a molten metal and advantageous in the cost aspect.

### [Brief Description of Drawings]

[FIG. 1] FIG. 1 is a cross-sectional view illustrating one embodiment of a die casting machine using a sleeve to which the laminated tube according to the present invention is applied.
[FIG. 2] FIG. 2 is a perspective view illustrating one embodiment of the laminated tube according to the present invention.
[FIG. 3] FIG. 3 is a cross-sectional view illustrating a layer structure of the laminated tube illustrated in FIG. 2.
[FIG. 4] FIG. 4 is a view to interpret one example of a method for fabricating the laminated tube according to the present invention.
[FIG. 5] FIG. 5A, FIG. 5B and FIG. 5C are photographs showing results of evaluation of the corrosion resistance of each sample of Reference Examples to a molten aluminum alloy.
[FIG. 6] FIG. 6A and FIG. 6B is photographs showing results of evaluation of presence/absence of generation of cracking and delamination in each layer in laminated tubes of Reference Examples and Comparative Examples.
[FIG. 7] FIG. 7 is a photograph showing a cross-section of a laminated tube of Examples.

### [Modes for Carrying out the Invention]

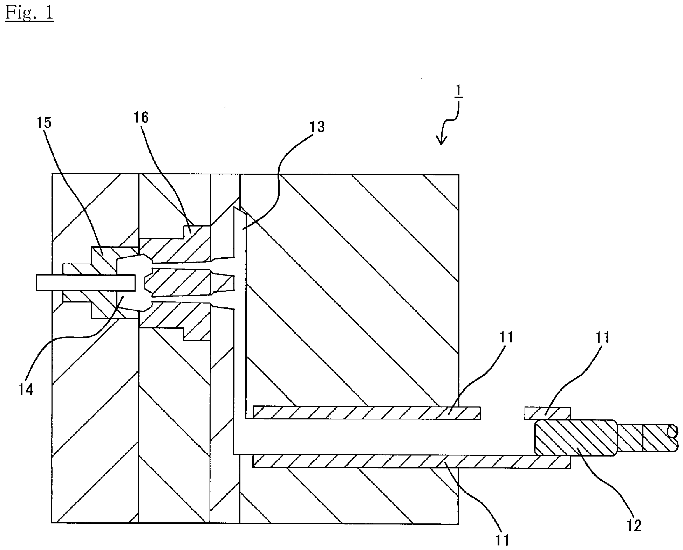

Hereinafter, one embodiment of the present invention will be described based on the drawings. The laminated tube according to the present invention can be used as components requiring the corrosion resistance in a high-temperature environment and a high hardness, and can be used, for example, as a sleeve of a die casting machine illustrated in FIG. 1. In the below, the present invention will be described in an embodiment using the laminated tube according to the present invention as a sleeve of a die casting machine.

FIG. 1 is a cross-sectional view illustrating one embodiment of a die casting machine 1 using a sleeve 11 to which the laminated tube according to the present invention is applied. The die casting machine 1 in the present embodiment is a die casting machine for forming a molten metal of aluminum or the like.

The die casting machine 1 illustrated in FIG. 1 has a sleeve 11, a plunger 12, a flow passage 13, a die cavity 14, a first die 15 and a second die 16. The sleeve 11 forms a passage for the plunger 12 to move through, and the passage formed by the sleeve 11 is connected to the flow passage 13 and the die cavity 14. The plunger 12 moves reciprocatingly back and forth in the passage formed by the sleeve 11, and injects a molten metal poured in the sleeve 11 from the sleeve 11 through the flow passage 13 into the die cavity 14.

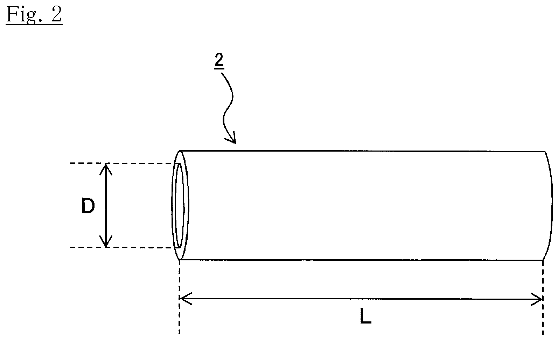

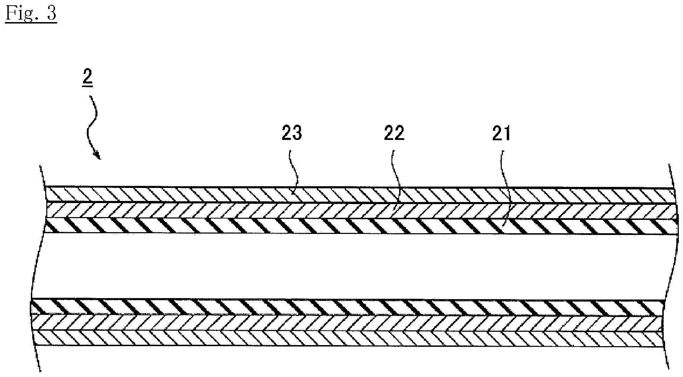

The sleeve 11 of the present embodiment is formed by using a laminated tube 2 illustrated in FIG. 2. FIG. 2 is a perspective view illustrating one embodiment of the laminated tube according to the present invention. In FIG. 2, the inner diameter of the laminated tube 2 is represented by D; and the length thereof, by L. The laminated tube 2 of the present embodiment has, as illustrated in a cross-sectional view of FIG. 3, a three-layer structure composed of a first layer 21 constituting an inner layer, a second layer 22 formed on the outer peripheral surface of the first layer 21, and further a third layer 23 formed on the outer peripheral surface of the second layer 22.

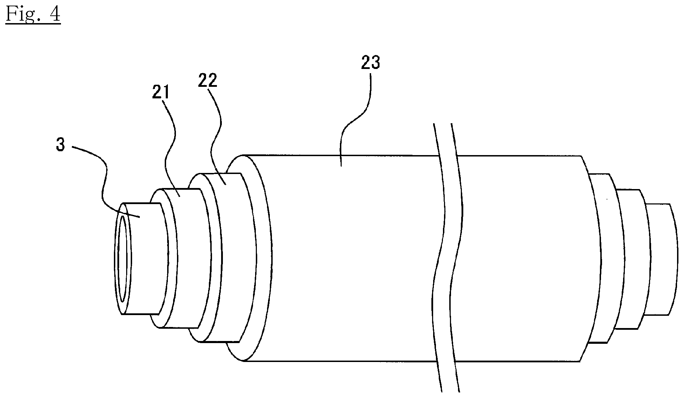

The laminated tube 2 of the present embodiment can be obtained, as illustrated in FIG. 4, by forming, by thermal spraying, the first layer 21, the second layer 22 and the third layer 23 in this order on a core material 3 composed of an inexpensive and easily-workable material such as iron, copper or aluminum, and thereafter removing the core material by machine work.

### <First layer 21>

The first layer 21 constituting the inner layer is constituted of a first material containing tungsten. The first material includes a boride-based tungsten base alloy. The boride-based tungsten base alloy is constituted of a hard phase composed mainly of tungsten and a binder phase composed mainly of a ternary complex boride.

The ternary complex boride constituting the binder phase is not especially limited, and one of or a mixture of two or more of Mo₂FeB₂, Mo₂CoB₂, Mo₂NiB₂, W₂FeB₂, W₂CoB₂, W₂NiB₂, MoCoB, WFeB and WCoB can be used.

Further the binder phase may contain, in addition to the above-mentioned ternary complex boride, a binary boride. As the binary boride, for example, one of or a mixture of two or more of borides represented by MₓB_{y} (M is any one of Ti, Zr, Ta, Nb, Cr and V; and x is 1 to 2, and y is 1 to 4) can be used.

The content proportion of the binary boride in the binder phase is preferably 1 to 20% by volume, and more preferably 3 to 15% by volume. By making the binder phase contain the binary boride in the above proportion, the first layer 21 of the obtained laminated tube 2, without impairing the corrosion resistance, can become high in the hardness in a normal temperature environment and a high-temperature environment, and can be improved in the wear resistance.

Further the content proportion of the binder phase containing the above-mentioned ternary complex boride and binary boride in the first layer 21 is preferably 1 to 30% by volume, and more preferably 3 to 20% by volume. By making the content proportion of the binder phase in the first layer 21 to be the above proportion, the obtained first layer 21, without impairing the excellent corrosion resistance and the toughness tungsten has, can become high in the hardness in a normal temperature environment and a high-temperature environment, and can be improved in the wear resistance, the adhesion resistance, the thermal shock resistance and the workability.

### <Second layer 22>

The second layer 22 can be formed by thermally spraying a second material having the property of causing no transformation accompanied by volume expansion when the second material is cooled from a temperature higher by 1,000°C or more than the melting point thereof down to 25°C, on the first layer 21. That is, the second layer 22 is formed of the second material having the property of causing no transformation accompanied by expansion caused by changes in the crystal structure and the crystal grain size during the cooling in the above temperature range. Thereby, when the second layer 22 is formed on the first layer 21 by thermal spraying, for example, in the course where the second material is cooled from about 2,500°C being a temperature of thermal spraying (that is, a temperature higher by 1,000°C or more than the melting point) down to 25°C being room temperature, the expansion of the second material is suppressed and the generation of delamination at the interface between the first layer 21 and the second layer 22 is prevented. Here, the second material, in the course of being formed as the second layer 22, does not always need to be heated to a temperature higher by 1,000°C or more than the melting point thereof, and also does not always need to be cooled down to 25°C or less. In the present embodiment, when the second layer is formed, for example, the second material may be melted at a temperature equal to or higher than the melting point thereof and the temperature not exceeding 1,000°C from the melting point, and thermally sprayed. In the present embodiment, alternatively, the second layer 22 formed by thermal spraying may not be cooled down to 25°C or less, after the thermal spraying, and may be held at a temperature higher than 25°C. In the present embodiment, as the second material, it suffices if there is persistently used a material having the property of "causing no transformation accompanied by expansion when the material is cooled from a temperature higher by 1,000°C or more than the melting point thereof down to 25°C".

In the present embodiment, combining such a second layer 22 with a third layer 23 described later, that is, laminating the second layer 22 and the third layer 23 having predetermined different properties enables making the total thickness of the second layer 22 and the third layer 23 to be large, and the strength of the obtained laminated tube 2 can thereby be improved.

Then, in the present embodiment, the transformation includes changes in the structure of a material due to changes in the crystal structure and the crystal grain size. The second material of the present embodiment may be one causing no transformation in the course of being cooled in the above temperature range, or may be one causing a transformation as long as its volume does not substantially expand in the course. That is, in the second material, transformation is allowed as long as being a transformation accompanied by shrink of its volume, or being a transformation exhibiting almost no change in its volume. Alternatively, in the second material, transformation is allowed to be generated as long as being a transformation having an expansion coefficient (expansion coefficient (%) = ((a volume after expansion - a volume before expansion)/the volume before expansion × 100) in transformation of 0.03% or less, a transformation accompanied by substantially no expansion.

In the present embodiment, it is preferable that the second material have a higher thermal expansion coefficient than the material constituting the first layer 21 and a lower thermal expansion coefficient than the material constituting the core material 3 illustrated in FIG. 4 described above. For example, in the case of using SUS304 or SUS316 as the core material 3, since the thermal expansion coefficient of SUS304 and SUS316 is about 18 × 10⁻⁶/K (the thermal expansion coefficient in the temperature range where the material is heated by heat of thermal spraying when the second layer 22 is formed), the thermal expansion coefficient of the second material is preferably less than 18 × 10⁻⁶/K. Thereby, when the second layer 22 is formed by thermal spraying, in the course where the second layer 22 is cooled after the thermal spraying, the generation of cracking in the second layer 22 can be prevented.

In the present embodiment, specific materials usable as the second material include ferritic steels such as SUS430 and SUS429.

### <Third layer 23>

The third layer 23 can be formed by thermally spraying a third material having the property of being capable of causing a transformation accompanied by expansion when the third material is cooled from a temperature higher by 1,000°C or more than the melting point thereof down to 25°C being room temperature, on the second layer 22. Thereby, when the third layer 23 is formed on the second layer 22 by thermal spraying, in the course where after the thermal spraying, for example, the third material is cooled from about 2,500°C being a temperature of thermal spraying (that is, a temperature higher by 1,000°C or more than the melting point) down to 25°C being room temperature, the third layer 23 is prevented from being shrunk excessively against the above-mentioned second layer 22, enabling prevention of the generation of cracking in the third layer 23. Further, the third layer 23 can be formed in a larger layer thickness than the second layer 22. Here, the third material, in the course of being formed as the third layer 23, does not always need to be heated to a temperature higher by 1,000°C or more than the melting point thereof, and also does not always need to be cooled down to 25°C or less. In the present embodiment, when the third layer 23 is formed, for example, the third material may be melted at a temperature equal to or higher than the melting point thereof and the temperature not exceeding 1,000°C from the melting point, and thermally sprayed. In the present embodiment, alternatively, the third layer 23 formed by thermal spraying may not be cooled down to 25°C or less, after the thermal spraying, and may be held at a temperature higher than 25°C. In the present embodiment, as the third material, it suffices if there is persistently used a material having the property of "being capable of causing a transformation accompanied by expansion when the third material is cooled from a temperature higher by 1,000°C or more than the melting point thereof down to 25°C".

Then, the third material of the present embodiment includes one causing a transformation in the course of being cooled in the above temperature range and having an expansion coefficient (expansion coefficient (%) = (a volume after expansion - a volume before expansion)/the volume before expansion × 100) in the transformation of 0.8% or more.

In the present embodiment, it is preferable that the third material have a lower thermal expansion coefficient than the material constituting the core material 3 illustrated in FIG. 4 described above. For example, in the case of using SUS304 or SUS316 as the core material 3, as in the second material described above, the thermal expansion coefficient of the third material is preferably less than 18 × 10⁻⁶/K. Thereby, when the third layer 23 is formed by thermal spraying, in the course where the third layer 23 is cooled after the thermal spraying, the generation of cracking in the third layer 23 can be prevented.

In the present embodiment, specific materials usable as the third material include martensitic steels such as SUS420 and SUS403.

In the above way, the laminated tube 2 of the present embodiment is constituted.

Further, the laminated tube 2 of the present embodiment may further comprise a steel layer formed by shrink fitting on the outer peripheral surface of the third layer 23. The steel layer shrink-fit on the outer peripheral surface of the third layer 23 includes, for example, a tubular member composed of a chromium-molybdenum steel corresponding to SCM440 prescribed by Japanese Industrial Standards (JIS G4053). The steel layer may be fixed with bolt fastening, pinning or the like on the outer peripheral surface of the third layer 23. The laminated tube 2, since having the steel layer, can have an enhanced strength.

<Method for manufacturing the laminated tube 2>

Then, a method for manufacturing the laminated tube 2 according to the present embodiment will be described.

First, the core material 3 and a powder for thermal spraying for forming the first layer 21 are provided. The powder for thermal spraying can be formed, for example, as follows. First, a tungsten powder to play a role as a hard phase and powders of a ternary complex boride and a binary boride to play a role as a binder phase are mixed; a binder and an organic solvent are added to the mixture; thereafter, the resultant is mixed and pulverized by using a pulverizing machine such as a ball mill. Then, the powder (primary particles of several micrometers) obtained by the mixing and pulverizing is granulated by a spray drier or the like to thereby form secondary particles of several ten micrometers; and the secondary particles are heat-treated and thereafter classified to thereby obtain the powder for thermal spraying.

Here, the conditions for the heat treatment of the secondary particles are preferably made to be a temperature of 1,000 to 1,400°C, a sintering time of 30 to 90 min, and a temperature-rise rate of 0.5 to 60K/min. When the heat treatment temperature of the secondary particles becomes less than 1,000°C, there arises a risk that the binding among the primary particles becomes weak; the powder for thermal spraying is liable to be collapsed in thermal spraying, and is not sufficiently accelerated in thermal spraying flame; and the deposition efficiency is then reduced. When the heat treatment temperature of the secondary particles exceeds 1,400°C, the sintering progresses and the binding among the powder becomes too firm, then making disintegration of sintered bodies difficult and making taking-out of the sintered bodies as a powder for thermal spraying to be difficult.

Then, by thermally spraying the powder for thermal spraying thus provided on the core material 3, the first layer 21 is formed. A method of thermal spraying to form the first layer 21 is not especially limited, but is preferably plasma thermal spraying, from the viewpoint of being suitable for thermal spraying of materials high in the melting point.

Then, the second material described above is provided and thermal sprayed on the first layer 21 to thereby form the second layer 22. Further the third material described above is provided and thermal sprayed on the second layer 22 to thereby form the third layer 23. Thereby, as illustrated in FIG. 4, on the core material 3, the first layer 21, the second layer 22 and the third layer 23 are formed in this order. Here, methods of thermal spraying to form the second layer 22 and the third layer 23 are not especially limited, but are, in the case of using the steels described above as the second material constituting the second layer 22 and the third material constituting the third layer 23, preferably wire arc thermal spraying.

In the present embodiment, further the steel layer may be formed by shrink-fitting a tubular steel on the outer peripheral surface of the third layer 23. Thereby, the laminated tube 2 is reinforced and the strength thereof can be improved.

Then, the core material 3 is machined by using a drilling machine, a BTA (Boring and Trepanning Association) deep hole drilling machine or the like. The core material 3 illustrated in Figure 4 is thereby removed, and there is obtained the laminated tube 2 as illustrated in FIG. 2, specifically the laminated tube 2 in which the first layer 21 makes the inner surface, and the second layer 22 and the third layer 23 are formed on the first layer 21.

The laminated tube 2 of the present embodiment is manufactured in the above way.

Then, in the laminated tube 2 of the present embodiment, as illustrated in FIG. 2, the ratio (L/D) of the length L of the laminated tube 2 to the inner diameter D of the first layer 21 is preferably 2 or more. At this time, particularly the inner diameter D of the first layer 21 is preferably 40 to 160 mm, and more preferably 40 to 120 mm. According to the manufacturing method of the present embodiment, even if the shape of the laminated tube 2 is relatively slender in the above range of the ratio (L/D) of the inner diameter D and the length L, the laminated tube 2 can well be manufactured.

That is, as a method for manufacturing a laminated tube in which its inner layer only is composed of a material containing tungsten, there is conceivable a method in which the material containing tungsten is thermally sprayed on the inner surface of a tubular member previously provided. In the case of manufacturing a laminated tube having a ratio (L/D) of the inner diameter D and the length L in the above range, however, the following problem arises: a torch for thermal spraying cannot be put in the interior of the tubular member and the thermal spraying cannot be carried out, because the inner diameter D is small or the length L is long.

The thermal spraying distance is suitably 100 to 150 mm, and even in the case of using an inner diameter torch, the thermal spraying cannot be carried out on the inner diameter of 100 mm or smaller. Hence, for the inner diameter of 100 mm or smaller, thermal spraying has to be angled and carried out from both end sides of the laminated tube, but generally when the thermal spraying angle is smaller than 45°, the film property sharply decreases; so, in the case of manufacturing a laminated tube by a method of thermal spraying on the inner surface of a tube, the following problem arises: for the tube having an L/D of 2 or more, a good-quality thermally sprayed film cannot be obtained.

By contrast, in the present embodiment, as illustrated in FIG. 4, since the core material 3 is removed after the first layer 21, the second layer 22 and the third layer 23 are formed on the core material 3, a slender laminated tube having a ratio (L/D) of the inner diameter D and the length L in the above range can well be manufactured.

Then, in the present embodiment, the thickness of the first layer 21 containing tungsten is preferably 0.5 to 2 mm, and more preferably 1 to 1.5 mm. By making the thickness of the first layer 21 in the above range, the obtained laminated tube 2 can be made to be excellent in the corrosion resistance to molten metals, and from the viewpoint of suppressing the amount of expensive tungsten used and being capable of reducing the amount of the energy used that is necessary for thermal spraying of tungsten, the condition is advantageous in the cost aspect.

Further in the present embodiment, the thickness of the second layer 22 is preferably 0.1 to 0.9 mm. By making the thickness of the second layer 22 in the above range, cracking of the second layer 22 due to cooling and shrink after the thermal spraying can be prevented.

The thickness of the third layer 23 is preferably 1.0 mm to 5.0 mm. By making the thickness of the third layer 23 in the above range, the strength of the laminated tube 2 can be enhanced.

The laminated tube 2 of the present embodiment, as described above, since comprising the first layer 21 containing tungsten as its inner layer, and the second layer 22 and the third layer 23 thereon, is excellent in the corrosion resistance to molten metals and besides advantageous in the cost aspect. That is, if the whole of the laminated tube 2 were to be formed of a material containing tungsten (boride-based tungsten base alloy or the like), though the corrosion resistance to molten metals would be improved, the following problem would arise: the material containing tungsten is expensive and the forming work is costly. By contrast, the laminated tube 2 of the present embodiment, since its inner layer only is constituted of the layer (first layer 21) containing tungsten, and the armor of the first layer 21 is formed of the second layer 22 and the third layer 23 composed of steels or the like, can be improved in the corrosion resistance to molten metals while being able to be manufactured relatively inexpensively. Additionally, the laminated tube 2 of the present embodiment, since its total thickness can be made large through the second layer 22 and the third layer 23, can be improved in the strength of the laminated tube 2. Further, making large the total thickness of the second layer 22 and the third layer 23 allows the steel layer to be formed, on the outer peripheral surface of the third layer 23, by shrink fit as described above, and the strength of the laminated tube 2 can also be more improved.

### [Examples]

Hereinafter, the present invention will be described by way of Examples, but the present invention is not limited to these Examples.

### <Reference Example 1>

First, a powder for thermal spraying was fabricated so that the composition of a first layer to be formed became the remainder of tungsten, 5.0% by volume of a binary boride (TiB₂) and 10.5% by volume of a ternary complex boride (Mo₂NiB₂). Specifically, 5 parts by weight of a paraffin was added to 100 parts by weight of a raw material prepared by mixing 0.8% by weight of B, 3.5% by weight of Mo, 1.1% by weight of Ni, 0.9% by weight of Ti and the remainder of W, and the mixture was wet pulverized in acetone by a vibrating ball mill for 25 hours to thereby fabricate a pulverized powder. Then, the fabricated pulverized powder was dried in a nitrogen atmosphere at 150°C for 18 hours. Then, the dried pulverized powder was mixed with acetone in a weight proportion of 1 : 1, and thereafter granulated by a spray drier; and the granulated powder was held in vacuum at 1,100°C for 1 hour to be sintered, and classified to thereby fabricate the powder for thermal spraying of a boride-based tungsten base alloy.

Then, as a base material on which thermal spraying was carried out, an SKD61 steel of 50 × 50 × 10 mm was provided. Then, the above powder for thermal spraying was thermally sprayed on the base material by a plasma thermally spraying machine (manufactured by Eutectic Japan Ltd., EUTRONIC PLASMA SYSTEM 5000) to thereby form a thermally sprayed layer of the boride-based tungsten base alloy on the base material. Then, the resultant was worked into a block shape of 4 mm × 4 mm × 20 mm to thereby fabricate a test piece.

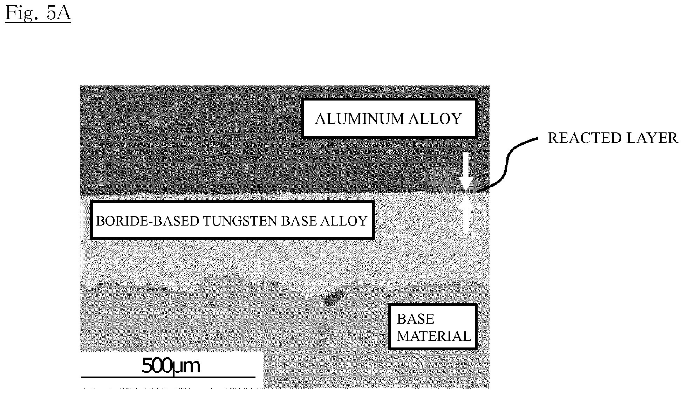

Then, a graphite-made mold was provided; and the above test piece and an ADC12 aluminum alloy (Cu: 1.5 to 3.5% by weight, Si: 9.6 to 12% by weight, and Al: the remainder) were put in the mold, and heated in vacuum up to 700°C to melt the aluminum alloy, and held at the temperature of 700°C for 1 hour. Then, the test piece and the aluminum alloy were cooled to room temperature; and the cooled test piece and the aluminum alloy were cut and the cross-section was observed with SEM; and the thickness of a reacted layer formed with the melted aluminum alloy on the surface of the test piece was measured. The result is shown in FIG. 5(A) and Table 1.

### <Reference Example 2>

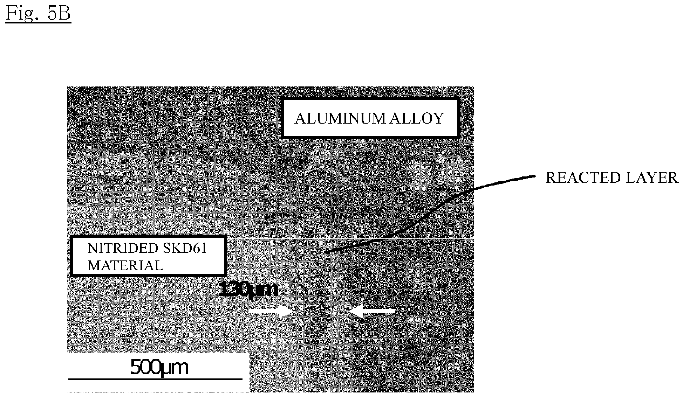

An SKD61 steel (nitrided SKD61 material) whose surface was nitrided to form a nitride layer on its surface was worked into a block shape of 4 mm × 4 mm × 20 mm to thereby make a test piece, and evaluation was similarly carried out as in Reference Example 1. The result is shown in FIG. 5(B) and Table 1.

### <Reference Example 3>

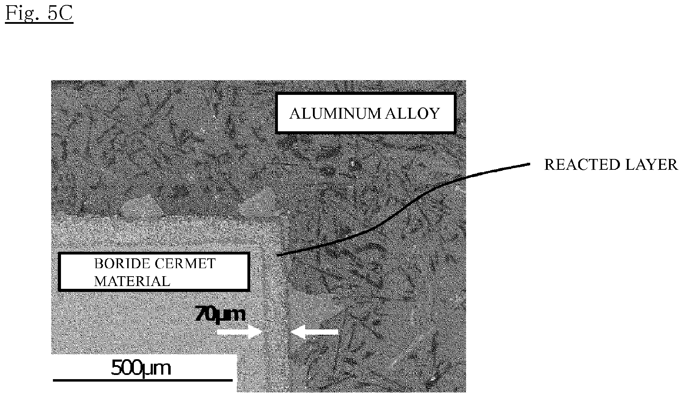

Raw material powders were blended so that the blended composition became 4.7% by weight of B, 40% by weight of Mo, 8% by weight of Cr, 3% by weight of Ni and the remainder of Fe; then, 5 parts by weight of a paraffin was added to 100 parts by weight of the blended raw material powders; and the resultant was wet mixed and pulverized in acetone by using a vibrating ball mill for 25 hours. Then, the wet mixed and pulverized raw material powder was dried in a nitrogen atmosphere at 150°C for 18 hours to thereby obtain a pulverized. Then, the obtained pulverized was press shaped, and the obtained green compact was sintered at a temperature of 1,473 to 1,573K for 20 min to thereby obtain a sample composed of a hard sintered alloy. Here, the temperature-rise rate in the sintering was made to be 10K/min. Then, the obtained sample was worked into a block shape of 4 mm × 4 mm × 20 mm to thereby make a test piece. Evaluation was similarly carried out as in Reference Example 1. The result is shown in FIG. 5(C) and Table 1.

### [Table 1]

**Table 1**

| | Outermost Surface | Thickness of Reacted Layer [µm] |
|---|---|---|
| Reference Example 1 | Thermally sprayed boride-based tungsten base alloy layer | 8 |
| Reference Example 2 | Nitrided SKD61 material | 70 |
| Reference Example 3 | Hard sintered alloy | 130 |

As shown in FIG. 5(A) and Table 1, it was confirmed that Reference Example 1, in which a layer composed of the boride-based tungsten base alloy was formed on the surface, had a thickness of the reacted layer formed with the melted aluminum alloy of only 8 µm, and was excellent in the corrosion resistance to the molten metal.

By contrast, as shown in FIG. 5(B), FIG. 5(C) and Table 1, it was confirmed that Reference Example 2, which was a nitrided SKD61 material, and Reference Example 3, which was a hard sintered alloy, had large thicknesses of the reacted layers formed by the melted aluminum alloy of 70 µm (Reference Example 2) and 130 µm (Reference Example 3), and were inferior in the corrosion resistance to the molten metal.

### <Reference Example 4>

A tubular member composed of SUS316 and having an outer diameter of 39 mm was provided as the core material. Then, on the outer peripheral surface of the core material provided, a thermally sprayed layer of a boride-based tungsten base alloy of the same composition as that of the above-mentioned Reference Example 1 was formed as the first layer by plasma thermal spraying. Here, the thickness of the thermally sprayed layer of the boride-based tungsten base alloy was made to be 1.5 mm. Then, on the first layer, SUS316 (which has as high a thermal expansion coefficient in the temperature range in thermal spraying as about 18 × 10⁻⁶/K, and causes no transformation accompanied by expansion when being cooled from about 2,500°C, which was a thermal spraying temperature, down to 25°C, which was room temperature), which is an austenitic steel, was thermally sprayed by wire arc thermal spraying to form the second layer having a thickness of 0.3 mm to thereby fabricate a sample. For the fabricated sample, presence/absence of generation of cracking in the second layer was visually checked; thereafter, the sample was cut and the cross-section was observed with an optical microscope, and whether or not delamination was generated at the interface between the first layer and the second layer was observed. The result is shown in Table 2.

### <Reference Example 5>

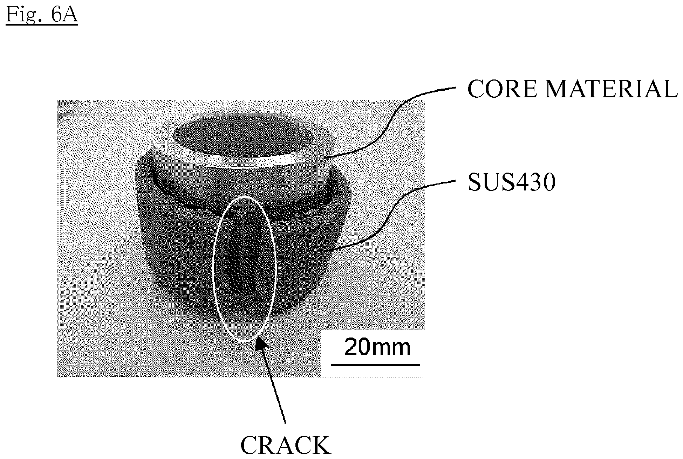

A sample was fabricated as in Reference Example 4, except for forming, as the second layer, a thermally sprayed layer having a thickness of 1.0 mm of SUS430 (which has as low a thermal expansion coefficient in the temperature range in thermal spraying as about 10 × 10⁻⁶/K, and causes no transformation accompanied by expansion when being cooled from about 2,500°C, which was a thermal spraying temperature, down to 25°C, which was room temperature), which is a ferritic steel; and evaluation was similarly carried out. The result is shown in Table 2 and FIG. 6(A).

### <Comparative Example 1>

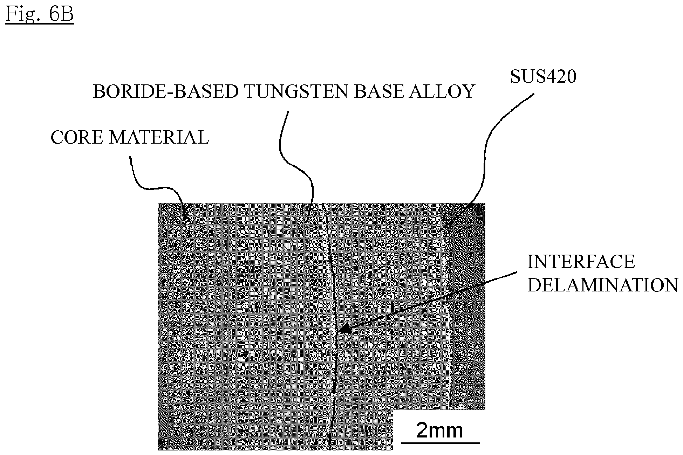

A sample was fabricated as in Reference Example 4, except for forming, as the second layer, a thermally sprayed layer having a thickness of 5.0 mm of SUS420 (which has as low a thermal expansion coefficient in the temperature range in thermal spraying as about 10 × 10⁻⁶/K, and causes a transformation accompanied by expansion when being cooled from about 2,500°C, which was a thermal spraying temperature, down to 25°C, which was room temperature), which is a martensitic steel; and evaluation was similarly carried out. The result is shown in Table 2 and FIG. 6(B).

### [Table 2]

**Table 2**

| | Core Material | Layer Structure | | | | | | State of the Second Layer | Interface between the First Layer and the Second Layer |
|---|---|---|---|---|---|---|---|---|---|
| | | First Layer | | Second Layer | | | | | |
| | | Material | Thickness [mm] | Material | Thermal Expansion Coefficient [× 10⁻⁶/K] | Transformation accompanied by Expansion after Thermal Spraying | Thickness [mm] | | |
| Reference Example 4 | SUS316 | boride-based tungsten base alloy | 1.5 | SUS316 (austenitic) | about 18 | absence | 0.3 | cracking generation | no delamination |
| Reference Example 5 | | | | SUS430 (ferritic) | about 10 | absence | 1.0 | cracking generation | no delamination |
| Comparative Example 1 | | | | SUS420 (martensitic) | about 10 | presence | 5 | no cracking | delamination generation |

As shown in Table 2, in Reference Example 4, which used SUS316, which has a relatively high thermal expansion coefficient, as the second layer, during the formation of the second layer by thermal spraying, cracking was resultantly generated at the time point of a thickness of the second layer of 0.3 mm.

As shown in Table 2 and FIG. 6(A), in Reference Example 5, in which the thickness of the second layer was made up to as large as 1.0mm, during the formation of the second layer by thermal spraying, cracking was resultantly similarly generated in the second layer though the case was one using SUS430, which has a relatively low thermal expansion coefficient, as the second layer.

Further as shown in Table 2 and FIG. 6(B), in Comparative Example 1, which used, as the second layer, SUS420, which though having a relatively low thermal expansion coefficient, causes a transformation accompanied by expansion when being cooled from about 2,500°C down to 25°C, no cracking was generated in the second layer despite the formation of the second layer up to 5.0 mm in thickness, but delamination was resultantly generated at the interface between the first layer (boride-based tungsten base alloy) and the second layer.

### <Example 1>

A tubular member composed of SUS304 and having an outer diameter of 39 mm was as the core material. Then, on the outer peripheral surface of the core material provided, a thermally sprayed layer of a boride-based tungsten base alloy of the same composition as that of the above-mentioned Reference Example 1 was formed as the first layer by plasma thermal spraying. Here, the thickness of the thermally sprayed layer of the boride-based tungsten base alloy was made to be 1.5 mm. Then, on the first layer, SUS430 (which has as low a thermal expansion coefficient in the temperature range in thermal spraying as about 10 × 10⁻⁶/K, and causes no transformation accompanied by expansion when being cooled from about 2,500°C, which was a thermal spraying temperature, down to 25°C, which was room temperature) was thermally sprayed until its thickness became 0.5 mm by wire arc thermal spraying to form the second layer. Then, for the formed second layer, presence/absence of generation of cracking was visually checked.

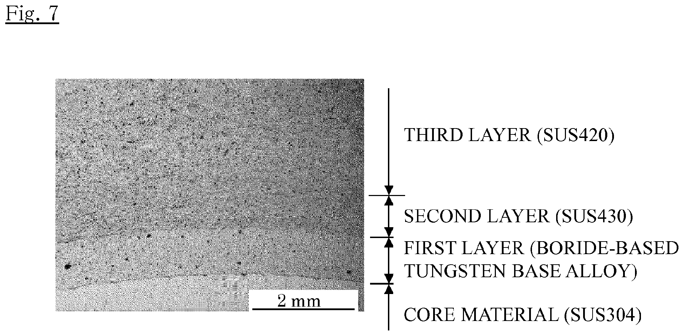

Then, on the second layer, SUS420 (which has as low a thermal expansion coefficient in the temperature range in thermal spraying as about 10 × 10⁻⁶/K, and causes a transformation accompanied by expansion when being cooled from about 2,500°C, which was a thermal spraying temperature, down to 25°C, which was room temperature) was thermally sprayed by wire arc thermal spraying to form the third layer having a thickness of 3.5 mm to thereby fabricate a sample. For the fabricated sample, presence/absence of generation of cracking in the third layer was visually checked; further, the sample was cut and the cross-section was observed with an optical microscope, and whether or not delamination was generated at the interface between the first layer and the second layer and at the interface between the second layer and the third layer, respectively, was observed. The result is shown in Table 3 and FIG. 7.

### <Comparative Example 2>

A sample was fabricated as in Example 1, except for forming, as the second layer, a thermally sprayed layer of SUS420 up to 5.0 mm in thickness by wire arc thermal spraying, and forming no third layer. Evaluation was similarly carried out. The result is shown in Table 3.

### <Reference Example 6>

A sample was fabricated as in Example 1, except for forming, as the second layer, a thermally sprayed layer of SUS304 (which has as high a thermal expansion coefficient in the temperature range in thermal spraying as about 18 × 10⁻⁶/K, and causes no transformation accompanied by expansion when being cooled from about 2,500°C, which was a thermal spraying temperature, down to 25°C, which was room temperature) up to 0.3 mm in thickness by wire arc thermal spraying, and forming no third layer. Evaluation was similarly carried out. The result is shown in Table 3.

### <Reference Example 7>

A sample was fabricated as in Example 1, except for forming, as the second layer, a thermally sprayed layer of SUS430 up to 1.0 mm in thickness by wire arc thermal spraying, and forming no third layer. Evaluation was similarly carried out. The result is shown in Table 3.

### [Table 3]

**Table 3**

| | Core Material | Layer Structure | | | | | | | | | | State of the Second Layer | Interface between the First Layer and the Second Layer | State of the Third Layer | Interface between the Second Layer and the Third Layer |
|---|---|---|---|---|---|---|---|---|---|---|---|---|---|---|---|
| | | First Layer | | Second Layer | | | | Third Layer | | | | | | | |
| | | Material | Thickness [mm] | Material | Thermal Expansion Coefficient [× 10⁻⁶/K] | Transformation accompanied by Expansion after Thermal Spraying | Thickness [mm] | Material | Thermal Expansion Coefficient [× 10⁻⁶/K] | Transformation accompanied by Expansion after Thermal Spraying | Thickness [mm] | | | | |
| Example 1 | SUS304 | boride-based tungsten base alloy | 1.5 | SUS430 (ferritic) | about 10 | absence | 0.5 | SUS420 martensitic) | about 10 | presence | 3.5 | no cracking | no delamination | no cracking | no determination |
| Comparative Example 2 | | | | SUS420 (martensitic) | about 10 | presence | 5.0 | - | | | | no cracking | delamination generation | - | - |
| Reference Example 6 | | | | SUS304 (austeritic) | about 18 | absence | 0.3 | - | | | | cracking generation | no delamination | - | - |
| Reference Example 7 | | | | SUS430 (ferritic) | about 10 | absence | 1.0 | - | | | | cracking generation | no delamination | - | - |

As shown in Table 3 and FIG. 7, in Example 1, which used, as a material constituting the second layer, a material causing no transformation accompanied by expansion when being cooled from about 2,500°C down to 25°C, and as a material constituting the third layer, a material causing a transformation accompanied by expansion when being cooled from about 2,500°C down to 25°C, no cracking was generated in the second layer and no delamination was generated at the interface between the first layer and the second layer and at the interface between the second layer and the third layer. It was thereby confirmed that while cracking and delamination in the second layer and the third layer were prevented, the layer thicknesses of the second layer and the third layer could be made large and the strength of the obtained laminated tube could be enhanced.

By contrast, as shown in Table 3, in Reference Example 6, which used SUS304, which has a relatively high thermal expansion coefficient, as the second layer, during the formation of the second layer by thermal spraying, cracking was resultantly generated in the second layer at the time point of a thickness of 0.3 mm.

As shown in Table 3, in Reference Example 7, in which the thickness of the second layer was made up to as large as 1.0mm, during the formation of the second layer by thermal spraying, cracking was resultantly similarly generated in the second layer though the case was one using SUS430, which has a relatively low thermal expansion coefficient, as the second layer.

Further as shown in Table 3, in Comparative Example 2, which used SUS420, which causes a transformation accompanied by expansion in the cooling course, as the second layer, no cracking was generated despite the formation of the second layer up to 5.0 mm in thickness, but delamination was generated at the interface between the first layer and the second layer.

### [Reference Signs List]

- 1: DIE CASTING MACHINE
11 SLEEVE
12 PLUNGER
13 FLOW PASSAGE
14 DIE CAVITY
15 FIRST DIE
16 SECOND DIE
- 2: LAMINATED TUBE
21 FIRST LAYER
22 SECOND LAYER
23 THIRD LAYER
- 3: CORE MATERIAL

## Claims

1. A laminated tube, comprising:
a first layer comprising a first material containing tungsten;
a second layer formed on an outer peripheral surface of the first layer and comprising a second material having a property of causing no transformation accompanied by expansion when the second material is cooled from a temperature higher by 1,000°C or more than a melting point of the second material down to 25°C; and
a third layer formed on an outer peripheral surface of the second layer and comprising a third material having a property of being capable of causing a transformation accompanied by expansion when the third material is cooled from a temperature higher by 1,000°C or more than a melting point of the third material down to 25°C.

2. The laminated tube according to claim 1, wherein
the second material has a thermal expansion coefficient of less than 18 × 10⁻⁶/K; and
the third material has a thermal expansion coefficient of less than 18 × 10⁻⁶/K.

3. The laminated tube according to claim 1 or 2, further comprising a steel layer formed by shrink fit on an outer peripheral surface of the third layer.

4. The laminated tube according to any one of claims 1 to 3, wherein
the second material is a ferritic stainless steel; and
the third material is a martensitic stainless steel.

5. The laminated tube according to any one of claims 1 to 4, wherein a ratio (L/D) of a length L of the laminated tube to an inner diameter D of the first layer is 2 or more.

6. A method for manufacturing a laminated tube, comprising:
a first step of providing a core material;
a second step of thermally spraying a first material containing tungsten on an outer peripheral surface of the core material to thereby form a first layer;
a third step of thermally splaying, on an outer peripheral surface of the first layer, a second material having a property of causing no transformation accompanied by expansion when the second material is cooled from a temperature higher by 1,000°C or more than a melting point of the second material down to 25°C to thereby form a second layer;
a fourth step of thermally spraying, on an outer peripheral surface of the second layer, a third material having a property of being capable of causing a transformation accompanied by expansion when the third material is cooled from a temperature higher by 1,000°C or more than a melting point of the third material down to 25°C to thereby form a third layer; and
a fifth step of removing the core material.

7. The method for manufacturing a laminated tube according to claim 6, wherein
the second material is a ferritic stainless steel; and
the third material is a martensitic stainless steel.

8. The method for manufacturing a laminated tube according to claim 6 or 7, further comprising, after the core material is removed in the fifth step, a sixth step of shrink-fitting a steel on an outer peripheral surface of the third layer to thereby form a steel layer thereon.
